# EUROPÄISCHE PATENTSCHRIFT

(11) **EP 3 396 336 B1**
(45) Veröffentlichungstag und Bekanntmachung des Hinweises auf die Patenterteilung: **09.09.2020**
(21) Anmeldenummer: 18161070.0
(22) Anmeldetag: 09.03.2018
(51) Int. Cl.: G01G 19/52

(54) **SICHERHEITSSCHRANK MIT ZUMINDEST EINER WÄGEZELLE**
SAFETY CABINET WITH AT LEAST ONE WEIGHING UNIT
ARMOIRE DE SÉCURITÉ À AU MOINS UNE CELLULE DE PESAGE

(30) Priorität: 25.04.2017 DE 202017102435 U
(43) Veröffentlichungstag der Anmeldung: 31.10.2018
(73) Patentinhaber: Düperthal Sicherheitstechnik GmbH & Co.KG, 63791 Karlstein (DE)
(72) Erfinder: Backhaus, Frank, 320551 Herford (DE)
(74) Vertreter: Andrejewski - Honke Patent- und Rechtsanwälte Partnerschaft mbB

(56) Entgegenhaltungen:
- WO-A1-03/024289
- DE-A1- 10 000 634
- DE-B3- 10 338 290
- DE-U1-202015 100 532

## Beschreibung

Die Erfindung betrifft einen Sicherheitsschrank, insbesondere Gefahrstoffschrank zur Lagerung flüssiger oder gasförmiger Gefahrstoffe, mit einem Schrankkorpus, und mit einer Wägeeinrichtung nach Anspruch 1.

Sicherheitsschränke sind in vielfältiger Ausgestaltung bekannt und werden in der Praxis im Allgemeinen eingesetzt, um Chemikalien oder andere, meistens flüssige, Gefahrgüter bzw. Gefahrstoffe zu lagern. Dazu werden die genannten Gefahrgüter im Regelfall in Flaschen, Kanistern etc. in dem betreffenden Schrank bevorratet. Um die Gefahrgüter bzw. Gefahrstoffe im Brandfall zu schützen und beispielsweise Explosionen zu verhindern, ist der Sicherheitsschrank in der Regel mit einer bestimmten und vorgegebenen Feuerbeständigkeit ausgerüstet. Diese kann beispielsweise zu einer Feuerwiderstandsfähigkeit von 60 Minuten oder 90 Minuten korrespondieren. Dadurch werden insbesondere im Brandfall Feuer und Explosionen vermieden. Das hat sich grundsätzlich bewährt.

So verfügt der Sicherheitsschrank entsprechend der DE 20 2015 100 532 U1 der Anmelderin über eine an den Schrankkorpus angeschlossene Abluftleitung und auch eine Zuluftleitung. Außerdem ist in der Abluftleitung bzw. der Zuluftleitung ein Sensor zur Luftmengenmessung angeordnet. Mit Hilfe einer übergeordneten Steuereinheit kann der Sensor zur zeitabhängigen Luftsteuerung genutzt werden.

Bei einem nicht notwendigerweise als Sicherheitsschrank ausgebildeten gattungsgemäßen Schrank, wie er durch die DE 103 38 290 B3 bekannt geworden ist, ist eine Vorrichtung zum Abwiegen der Restmenge einer Substanz in einem Vorratsbehälter vorgesehen Der Vorratsbehälter ist im Schrank angeordnet. Außerdem ist eine Wägezelle realisiert, auf welcher der Vorratsbehälter abgestellt wird. Insgesamt soll auf diese Weise die Restmenge der Substanz in dem fraglichen Vorratsbehälter im Innern des Schrankes genau bestimmt werden.

Der bekannte Schrank mit der Wägezelle für den Vorratsbehälter hat sich grundsätzlich bewährt. Allerdings ist die konstruktive Ausgestaltung insofern aufwendig, als im Innern des Schranks ein zusätzliches Stativ vorgesehen werden muss, an dem eine Plattform mit der Wägezelle befestigt wird. Die Plattform mit der Wägezelle dient dann ihrerseits dazu, hierauf den Vorratsbehälter abzustellen. Das Stativ stützt sich seinerseits auf einem Schrankboden ab und ist an eine Schrankwand angeschlossen.

Folgerichtig muss der Schrank konstruktiv speziell ausgebildet werden. Außerdem nimmt die bekannte Wägeeinrichtung mit dem Stativ und der Plattform relativ viel Platz ein, so dass meistens nur ein einziger Behälter mit dem betreffenden Gefahrstoff im Innern des Schrankes bevorratet werden kann. Das ist vor dem Hintergrund eines heutzutage zunehmenden Platzbedarfes und unter Berücksichtigung der gleichzeitigen Anforderung an besonders kompakte Abmessungen solcher Sicherheitsschränke nachteilig. Hier will die Erfindung Abhilfe schaffen.

Der Erfindung liegt das technische Problem zugrunde, einen derartigen Sicherheitsschrank so weiterzuentwickeln, dass sein zur Verfügung stehendes Aufnahmevolumen für die Gefahrstoffe durch die zusätzlich vorgesehene Wägeeinrichtung nicht oder praktisch nicht negativ beeinflusst wird. Außerdem sollen die Bedienung und Sicherheit verbessert werden.

Zur Lösung dieser technischen Problemstellung ist ein gattungsgemäßer Sicherheitsschrank im Rahmen der Erfindung dadurch gekennzeichnet, dass die Wägeeinrichtung zur Massebestimmung des Schrankkorpus und/oder von im Schrankkorpus befindlichen Schrankbestandteilen bzw. von wenigstens einem im Schrankkorpus befindlichen Schrankbestandteil eingerichtet ist und dazu zumindest eine Wägezelle aufweist, welche fußseitig des Schrankkorpus und/oder des jeweiligen Schrankbestandteiles angeordnet ist sowie masseproportionale elektrische Signale an eine Steuereinheit übermittelt, welche die fraglichen Signale verarbeitet und mit einer Bedieneinheit zur Identifizierung eines Benutzers und/oder des jeweiligen Gefahrstoffes verbunden ist.

Der im Schrankkorpus befindliche Schrankbestandteil ist im Allgemeinen zur Aufnahme eines oder mehrerer Gefahrstoffe ausgebildet. Außerdem ist der Schrankbestandteil meistens gegenüber dem Schrankkorpus beweglich gestaltet. Tatsächlich lässt sich der fragliche Schrankbestandteil im Regelfall zwischen zumindest einer Vorratsposition und einer Beladungsposition hin- und herbewegen. Bei dem Schrankbestandteil handelt es sich beispielsweise um eine Schublade, einen Auszug, eine Plattform, eine Innenschale etc..

Die Wägeeinrichtung ist erfindungsgemäß mit zumindest der einen Wägezelle ausgerüstet. Im Regelfall sind mehrere Wägezellen vorgesehen. Die Wägezellen können beispielsweise fußseitig verteilt des Schrankkorpus und/oder des jeweiligen Schrankbestandteiles angeordnet werden. Außerdem ist die Wägezelle meistens mit zumindest einem masseproportional verformbaren Federkörper ausgerüstet. Die masseproportionale Verformung des Federkörpers kann dabei typischerweise mit Hilfe von Dehnungsmessstreifen erfasst und ausgewertet werden.

Die masseproportionalen elektrischen Signale werden erfindungsgemäß an die Steuereinheit übermittelt, die die fraglichen elektrischen Signale beispielsweise mittelt, speichert oder anderweitig verarbeitet.

Im Rahmen der Erfindung ist also der speziell gestaltete Sicherheitsschrank insgesamt mit einer Wägeeinrichtung ausgerüstet, die zur Massebestimmung des Schrankkorpus und/oder eines im Schrankkorpus befindlichen Schrankbestandteils eingerichtet ist. Da an dieser Stelle eine oder mehrere Wägezellen zum Einsatz kommen und solche Wägezellen typischerweise über geringe Abmessungen verfügen, die im Millimeter- oder allenfalls Zentimeterbereich liegen, kann die jeweilige Wägezelle problemlos fußseitig des Schrankkorpus und/oder des jeweiligen Schrankbestandteiles angeordnet werden. Der Einbau oder die Anbringung der fraglichen und kleinbauenden Wägezelle beeinflusst dabei das insgesamt im Innern des erfindungsgemäßen Sicherheitsschrankes zur Verfügung stehende Lagervolumen bzw. Aufnahmevolumen nicht oder praktisch nicht.

Soll beispielsweise die Wägeeinrichtung zur Massebestimmung des Schranckorpus vorgesehen und realisiert werden, kann die eine oder können die mehreren Wägezellen schlicht und ergreifend in einen Fuß oder Sockel des betreffenden Schrankkorpus integriert werden. Das heißt, in diesem Fall kann die betreffende Wägezelle beispielsweise in einen Fuß integriert werden oder einen Fuß sogar ersetzen, mit dessen Hilfe der Schrankkorpus auf einem Boden oder allgemein einer Fläche abgestellt wird.

Alternativ hierzu kann es sich bei dem mit der Wägeeinrichtung ausgerüsteten Schrankbestandteil auch um eine Innenschale handeln. In diesem Fall ist der Sicherheitsschrank zweischalig mit dem äußeren Schrankkorpus und der getrennt hiervon ausgelegten Innenschale ausgerüstet. Die Innenschale stellt das Aufnahmevolumen für die Gefahrstoffe zur Verfügung und füllt den Schrankkorpus praktisch vollständig aus. Ferner ist die Innenschalte fußseitig gegenüber dem Schrankkorpus gelagert und stützt sich folglich beweglich auf einem Boden des Schrankkorpus ab. Die Innenschale kann sich nun fußseitig mit Hilfe der einen oder der mehreren Wägezellen gegenüber dem Schranckorpus abstützen. Dadurch lässt sich eine Änderung der Masse der Innenschale gegenüber dem Schrankkorpus mit Hilfe der Wägeeinrichtung feststellen. Gleiches gilt für den Fall, dass gemäß der zuvor beschriebenen Variante der gesamte Schrankkorpus von seiner Masse her mit Hilfe der Wägeeinrichtung gewogen wird.

In beiden Fällen korrespondiert eine Änderung der Masse des Schrankkorpus bzw. seiner Innenschale dazu, dass ein im Innern des Schrankkorpus bzw. der Innenschale aufgenommener Gefahrstoff beispielsweise von einem Benutzer aus dem Sicherheitsschrank entnommen, teilweise verbraucht und wieder in den Sicherheitsschrank zurückgestellt wird. Aus den Massewerten vor und nach der Entnahme kann dann auf den Verbrauch des betreffenden Gefahrstoffes rückgeschlossen werden.

Anstelle den gesamten Schrankkorpus hinsichtlich seiner Masse bzw. etwaiger Massenänderungen auszuwerten oder auch die Innenschale wird im Allgemeinen so vorgegangen, dass eine im Schrankkorpus befindliche Schublade, ein Auszug, eine Plattform etc. als Schrankbestandteile mit der jeweiligen Wägeeinrichtung ausgerüstet ist. Kommt beispielsweise eine Schublade zum Einsatz, so ist es denkbar, dass sich ein Schubladenkörper über jeweils zwischengeschaltete Wägezellen an einer Schubladenführung bzw. gegenüber in einer Schubladenführung geführten Schubladenrollen abstützt. Vergleichbar mag bei einer Plattform gearbeitet werden, bei welcher die eine oder die mehreren Wägezellen zwischen der Plattform und beispielsweise Plattformrollen zwischengeschaltet sind, die ihrerseits in Plattformführungen laufen.

Eine andere Möglichkeit stellt ein Auszug im Innern des Sicherheitsschrankes dar. Ein solcher Auszug oder auch mehrere solcher Auszüge lassen sich aus einer Ruhelage im Innern des Schrankkorpus selbsttägig oder mit Hilfe eines motorischen Antriebes in eine Offenlage ausfahren oder auch ausschwenken, wie dies beispielsweise im Stand der Technik nach der DE 10 2007 003 451 A1 beschrieben wird. Auch in diesem Fall kann der eine oder können die mehreren Auszüge jeweils fußseitig mit einer oder mehreren Wägezellen ausgerüstet werden. Die jeweilige Wägezelle mag dabei zwischen einem Boden des Auszuges und Auszugrollen zwischengeschaltet werden, mit deren Hilfe sich der Auszug am Boden des Schrankkorpus abstützt.

Jedenfalls stehen vielfältige Auslegungen und Anbringungsmöglichkeiten der einzelnen Wägezellen zur Verfügung. Außerdem lassen sich die jeweiligen Wägezellen problemlos meistens fußseitig des Schrankkorpus bzw. des jeweils im Schrankkorpus befindlichen Schrankbestandteiles anbringen, und zwar meistens ohne dass aufwendige Anpassungsmaßnahmen erforderlich sind. Das lässt sich im Kern auf die besonders geringen Abmessungen solcher Wägezellen zurückführen, die für den beschriebenen Anwendungsfall typischerweise die Abmessungen einer Streichholzschachtel oder sogar noch deutlich darunter aufweisen. Als Folge hiervon wird das von dem erfindungsgemäßen Sicherheitsschrank zur Verfügung gestellte Aufnahmevolumen für die Gefahrstoffe nicht oder praktisch nicht verringert.

Als weiterer Vorteil kommt hinzu, dass bekannte Auslegungen und Schrankbestandteile unter Beibehaltung herkömmlicher Führungen zum Einsatz kommen, so dass sogar nicht nur neu hergestellte Sicherheitsschränke entsprechend ausgerüstet werden können, sondern auch grundsätzlich Nachrüstungen möglich sind. Hierbei geht die Erfindung von der weiteren Erkenntnis aus, dass typische Sicherheitsschränke heutzutage im Allgemeinen an eine elektrische Energieversorgung angeschlossen sind, so dass die einzelnen Wägezellen unschwer mit elektrischem Strom versorgt werden können.

Selbst wenn eine solche elektrische Energieversorgung nicht vorhanden sein sollte, kann der betreffende Sicherheitsschrank problemlos mit einem eigenen Energiespeicher, beispielsweise einem Akkumulator, ausgerüstet werden. Denn für die elektrische Energieversorgung der Wägezellen sind geringe Spannungen und Ströme ausreichend, die von einem solchen Akkumulator problemlos zur Verfügung gestellt werden. Meistens reicht eine Gleichspannung von einigen Volt aus und werden Stromstärken im Milliamperbereich beobachtet.

Wie bereits erläutert, übermittelt die jeweilige Wägezelle masseproportionale elektrische Signale an die Steuereinheit. In diesem Zusammenhang hat es sich als weiter vorteilhaft erwiesen, wenn ein Filter für die elektrischen Signale vorgesehen ist. Mit Hilfe dieses Filters kann das jeweilige masseproportionale elektrische Signal geglättet werden. Dadurch lassen sich beispielsweise auf den erfindungsgemäßen Sicherheitsschrank einwirkende Erschütterungen oder sonstige Störungen herausfiltern. Außerdem kann bei Rückgriff auf die Steuereinheit unschwer der gewünschte Verbrauchswert des jeweiligen Gefahrstoffes ermittelt werden. Dazu müssen lediglich die Massewerte vor und nach der Entnahme des betreffenden Gefahrstoffes miteinander verglichen werden.

Erfindungsgemäß ist zusätzlich die Bedieneinheit zur Identifizierung eines Benutzers und/oder des jeweiligen Gefahrstoffes vorgesehen. Die Bedieneinheit ist dazu mit der Steuereinheit verbunden. Außerdem wird regelmäßig so vorgegangen, dass die Steuereinheit aus den elektrischen Signalen der einzelnen Wägezellen oder der mehreren Wägezellen Verbrauchswerte des jeweiligen Gefahrstoffes ermittelt. Durch die Kopplung der Steuereinheit mit der Bedieneinheit lassen sich die Verbrauchswerte einem Bediener zuordnen.

Die Verbrauchswerte ihrerseits können für etwaige Nachbestellungen, Plausibilitätsabfragen und/oder auch Sicherheitsabfragen ausgewertet werden. In diesem Zusammenhang ist zusätzlich eine Warneinrichtung vorgesehen. Die Warneinrichtung kann direkt am oder im Sicherheitsschrank realisiert werden. Zur Beaufschlagung der Warneinrichtung ist diese regelmäßig an die Steuereinheit angeschlossen Es ist aber auch möglich, die Warneinrichtung alternativ oder zusätzlich entfernt vom Sicherheitsschrank beispielsweise an einer örtlich beabstandeten und übergeordneten Leitstelle zu realisieren.

Mit Hilfe der Bedieneinheit kann eine Zugangskontrolle des Benutzers vorgenommen werden. Dazu muss sich der Benutzer gegenüber der Bedieneinheit identifizieren. Das kann durch beispielsweise einen eingegebenen Code, einen ausgelesenen Code, eine benutzerspezifische Eigenschaft wie einen Fingerabdruck, einen Irisscann etc. erfolgen. Meistens ist die Bedieneinheit mit einer oder mehreren Schranktüren des Sicherheitsschrankes gekoppelt, die nur dann geöffnet werden können, wenn die Bedieneinheit nach Überprüfung des Benutzers dessen Zugangsberechtigung festgestellt und bejaht hat. Jedenfalls lässt sich auf diese Weise der jeweilige Benutzer eindeutig festlegen.

Darüber hinaus ist die Bedieneinheit zur Identifizierung des jeweiligen Gefahrstoffes eingerichtet und vorgesehen. Sobald sich also der Benutzer gegenüber der Bedieneinheit ausgewiesen hat und die Zugangskontrolle positiv abgelaufen ist, erwartet die Bedieneinheit meistens eine Eingabe zur Identifizierung des jeweiligen Gefahrstoffes. Das kann erneut über einen zum betreffenden Gefahrstoff gehörigen Code erfolgen. Es ist aber auch möglich, dass die Bedieneinheit mit einer Scaneinrichtung für einen Barcode ausgerüstet ist. Der Barcode gehört zum jeweiligen Gefahrstoff.

Auf diese Weise kann die mit der Bedieneinheit elektrisch verbundene Steuereinheit dem jeweiligen Benutzer eindeutig einen im Innern des Sicherheitsschrankes befindlichen Gefahrstoff zuordnen, den der Benutzer aus dem Sicherheitsschrank entnommen hat. Nachdem der Benutzer den Gefahrstoff teilweise verbraucht hat, stellt er diesen in den betreffenden Sicherheitsschrank wieder hinein. Dazu muss erneut typischerweise der Gefahrstoff gegenüber der Bedieneinheit identifiziert werden, um beispielsweise Verwechslungen zwischen einzelnen Sicherheitsschränken zu verhindern. Außerdem erfolgt die Rückgabe des betreffenden Gefahrstoffes im Regelfall erst dann, wenn sich der Benutzer erneut an der Bedieneinheit ausgewiesen hat und die Zugangskontrolle positiv abgeschlossen wurde.

Jedenfalls kann dem Benutzer bzw. einem in der Steuereinheit hinterlegten Benutzerkonto der entnommene Gefahrstoff und ein korrespondierender Verbrauchswert zugewiesen werden. Anhand des Verbrauchswertes lässt sich beispielsweise ein gesamter Lagerbestand des betreffenden Gefahrstoffes ermitteln und können beispielsweise Nachbestellungen vorgenommen werden.

Darüber hinaus sind Plausibilitätsabfragen möglich. In diesem Fall kann beispielsweise der ermittelte Verbrauchswert mit gemittelten hinterlegten Verbrauchswerten für den fraglichen Gefahrstoff verglichen werden. Weicht der aktuelle Verbrauchswert des Gefahrstoffes erheblich von hinterlegten Mittelwerten ab, so kann diese Tatsache genutzt werden, um beispielsweise die Warneinrichtung anzusteuern.

Wie bereits erläutert, kann die Warneinrichtung an dem betreffenden Sicherheitsschrank vorgesehen werden. Es ist alternativ oder zusätzlich aber auch möglich, dass die Warneinrichtung an der zentralen Leitstelle örtlich entfernt von dem betreffenden Sicherheitsschrank umgesetzt wird. Darüber hinaus kann auch die elektrisch mit der Bedieneinheit verbundene Steuereinheit an oder in dem betreffenden Sicherheitsschrank vorgesehen werden oder lässt sich die Steuereinheit alternativ oder zusätzlich der zentralen Leitstelle zuordnen bzw. ist in dieser vorgesehen. Auf diese Weise lässt sich der erfindungsgemäße Sicherheitsschrank gleichsam fernüberwachen.

Von besonderer Bedeutung ist darüber hinaus der Umstand, dass die Verbrauchswerte des jeweiligen Gefahrstoffes oder der mehreren Gefahrstoffe für eine Sicherheitsabfrage ausgewertet werden können. Diese Sicherheitsabfrage berücksichtigt beispielsweise erhöhte Verbrauchswerte eines Gefahrstoffes oder Verbrauchswerte verschiedener Gefahrstoffe in Kombination. So ist es beispielsweise denkbar, die Sicherheitsabfrage daran zu knüpfen, ob mit den fraglichen und dem jeweiligen Benutzer zugewiesenen Verbrauchswerten an Gefahrstoffen beispielsweise ein explosionsfähiges Gemisch, eine brennbare Lösung etc. hergestellt werden kann oder nicht. Grundsätzlich kann die Sicherheitsabfrage aber auch unabhängig vom jeweiligen Benutzer unter Berücksichtigung der gesamten Verbrauchswerte an Gefahrstoffen des jeweiligen Sicherheitsschrankes oder der mehreren Sicherheitsschränke in einem Labor vorgenommen und durchgeführt werden.

Jedenfalls lässt sich mit Hilfe des erfindungsgemäßen Sicherheitsschrankes nicht nur eine zuverlässige Verbrauchskontrolle an im fraglichen Sicherheitsschrank bevorrateten Gefahrstoffen durchführen. Sondern neben der Verbrauchskontrolle können auch Plausibilitätsabfragen und insbesondere Sicherheitsabfragen durchgeführt und vorgenommen werden, die in dieser Konsequenz bisher nicht möglich waren.

Das alles gelingt unter Berücksichtigung eines speziell ausgelegten Sicherheitsschrankes, dessen zur Verfügung stehendes Volumen zur Aufnahme der Gefahrstoffe gegenüber einem Sicherheitsschrank ohne integrierte Wägeeinrichtung praktisch nicht oder nicht wesentlich verringert ist. Durch die erfindungsgemäß integrierte Wägeeinrichtung zur Massebestimmung des Schrankkorpus und/oder von wenigstens einem im Schrankkorpus befindlichen Schrankbestandteil wird ein signifikanter Zusatznutzen zur Verfügung gestellt. Hierin sind die wesentlichen Vorteile zu sehen.

Im Folgenden wird die Erfindung anhand einer lediglich ein Ausführungsbeispiel darstellenden Zeichnung näher erläutert: es zeigen:
- Fig. 1: den erfindungsgemäßen Sicherheitsschrank in einer Übersicht,
- Fig. 2: den Sicherheitsschrank nach der Fig. 1 schematisch in einer ersten Ausführungsform sowie einer angedeuteten weiteren Ausführungsform,
- Fig. 3: den Sicherheitsschrank nach der Fig. 1 in einer weiter abgewandelten Variante, ausschnittsweise,
- Fig. 4: eine weitere Ausführungsform der Erfindung und
- Fig. 5: den Gegenstand nach der Fig. 4 in Seitenansicht.

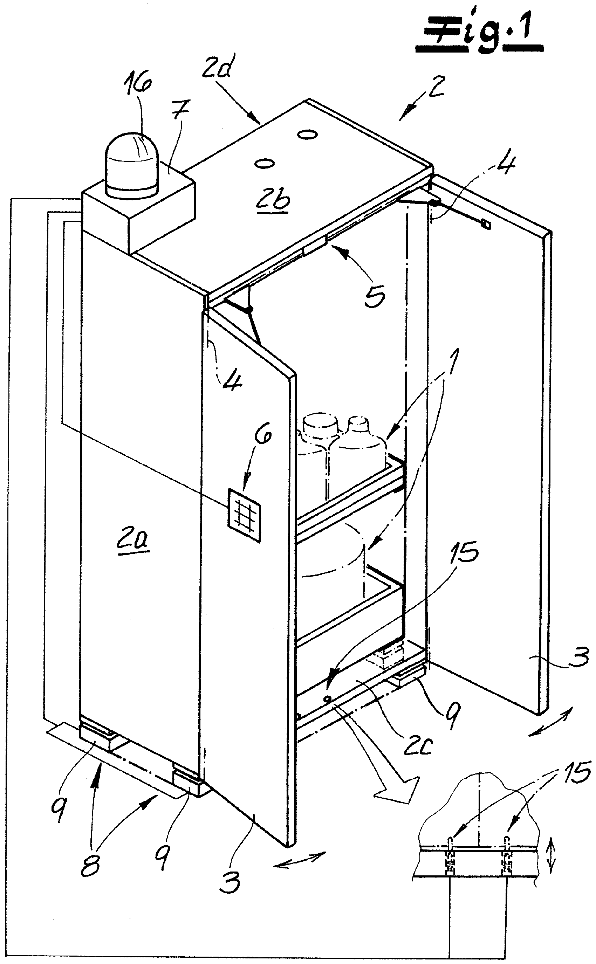

In den Figuren ist ein Sicherheitsschrank dargestellt, bei dem es sich nicht einschränkend um einen Gefahrstoffschrank handelt. Der Sicherheitsschrank bzw. Gefahrstoffschrank dient zur Bevorratung von in der Fig. 1 angedeuteten Chemikalien 1. Um die Chemikalien 1 komfortabel im Innern des Sicherheitsschrankes unterbringen zu können, sind an einen Schrankkorpus 2 im Ausführungsbeispiel zwei Drehflügeltüren 3 angeschlagen. Grundsätzlich kann natürlich auch nur mit einer einzigen Drehflügeltür 3 gearbeitet werden. Das ist jedoch nicht dargestellt.

Die Drehflügeltüren bzw. Schranktüren 3 lassen sich synchron von einem Bediener mit einer Hand öffnen und schließen (Einhandbedienung). Grundsätzlich ist auch eine Zweihandbedienung derart möglich, dass die beiden Drehflügeltüren 3 getrennt voneinander mit zwei Händen bedient werden.

Wie üblich verfügt der Schrankkorpus 2 über Seitenwandungen 2a sowie eine Kopf- oder Deckenwandung 2b, eine Bodenwandung 2c und schließlich eine Rückwandung 2d. Die Drehflügeltüren 3 sind jeweils um vertikale Achsen 4 drehbar an den Schrankkorpus 2 angeschlossen. Außerdem erkannt man anhand der Fig. 1, dass beide Drehflügeltüren 3 im Ausführungsbeispiel an ein gemeinsames Verbindungselement bzw. jeweilige Verbindungselemente 5 angeschlossen sind. Das einzige Verbindungselement 5 arbeitet im Ausführungsbeispiel über Schubstangen auf die jeweils angeschlossene Drehflügeltür 3. Das gilt selbstverständlich nur beispielhaft und ist keinesfalls einschränkend.

An eine Drehflügeltür 3 ist außenseitig eine Bedieneinheit 6 angeschlossen. Die Bedieneinheit 6 ist nach dem Ausführungsbeispiel elektrisch mit einer Steuereinheit 7 verbunden. Die Steuereinheit 7 ist im Ausführungsbeispiel außenseitig am Schrankkorpus 2 angeordnet. Tatsächlich ist die Steuereinheit 7 an die Deckenwandung 2b angeschlossen bzw. auf die Deckenwandung 2b aufgesetzt. Selbstverständlich kann die Steuereinheit 7 auch im Innern des Schranckorpus 2 beispielsweise fußseitig angeordnet und platziert werden. Die Steuereinheit 7 ist im Ausführungsbeispiel zur elektrischen Energieversorgung mit einem integrierten Akkumulator, einer Batterie etc. ausgerüstet. Grundsätzlich kann die Steuereinheit 7 aber auch über eine externe elektrische Energieversorgungsquelle mit der erforderlichen elektrischen Leistung versorgt werden. - Nicht dargestellt ist die weitere Möglichkeit, die Steuereinheit 7 nicht am oder im Schrankkorpus 2 anzuordnen, sondern vielmehr örtlich getrennt von dem dargestellten Sicherheitsschrank vorzusehen, beispielsweise in einer nicht näher dargestellten zentralen Leitstelle. In diesem Fall ist die Bedieneinheit 6 kommunikationstechnisch mit der Steuereinheit 7 verbunden, beispielsweise über das Internet.

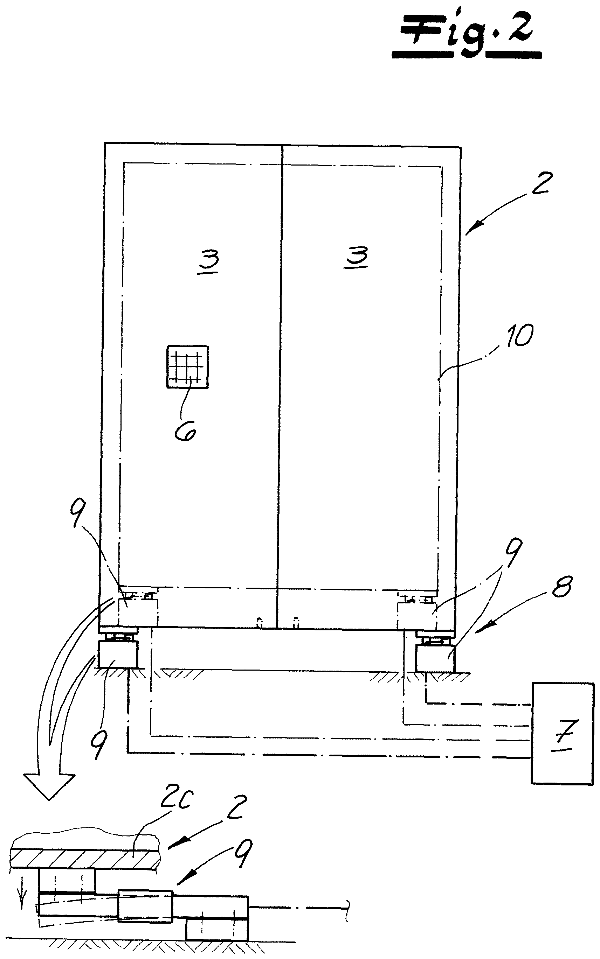

Der Sicherheitsschrank entsprechend der Darstellung nach der Fig. 1 ist ausweislich der Fig. 2 bis 5 zusätzlich noch mit einer Wägeeinrichtung 8 ausgerüstet. Die Wägeeinrichtung 8 dient zur Massebestimmung des Schrankkorpus 2, wie dies in einer Variante im Rahmen der Fig. 2 dargestellt ist. Zu diesem Zweck weist die Wägeeinrichtung 8 mehrere Wägezellen 9 auf, die im Detail in der Schnittdarstellung gemäß der Fig. 2 dargestellt sind. Die jeweilige Wägezelle 9 ist mit zumindest einem masseproportional verformbaren Federkörper ausgerüstet. Die masseproportionale Verformung des fraglichen Federkörpers wird in der Fig. 2 beim Vergleich der durchgezogen dargestellten unbelasteten Stellung im Vergleich zur belasteten und überhöht wiedergegebenen strichpunktierten Position deutlich. Zum Schutz der Wägezellen 9 sind diese hinter einer in der Fig. 1 angedeuteten Blende, einem Sockel des Schrankkorpus 2 oder auch in seinem Innern angeordnet.

Jedenfalls korrespondiert die masseproportionale Verformung des Federkörpers der Wägezelle 9 dazu, dass ein entsprechendes masseproportionales elektrisches Signal abgegeben wird. Denn die Verformungen des Federkörpers werden mit Hilfe von Dehnungsmessstreifen in bekannter Art und Weise aufgenommen und stehen als elektrische Signale ausgangsseitig der Wägezelle 9 unmittelbar zur Verfügung. Für die elektrische Versorgung der einzelnen Wägezellen 9 sorgt im Ausführungsbeispiel der in die Steuereinheit 7 integrierte Energiespeicher. Damit die masseproportionalen elektrischen Messwerte der jeweiligen Wägezelle 9 weiterverarbeitet werden können, sind die einzelnen Wägezellen 9 wie angedeutet mit der Steuereinheit 7 elektrisch verbunden, so dass die Steuereinheit 7 die von den Wägezellen 9 aufgenommenen Massewerte jeweils verarbeiten kann.

Zu diesem Zweck ist die Steuereinheit 7 mit einem integrierten Filter für die elektrischen Signale ausgerüstet. Dadurch wird das unter Umständen über die Zeit schwankende Messsignal der jeweiligen Wägezelle 9 geglättet. Der Filter ist dazu beispielsweise als Softwarefilter im Innern der Steuereinheit 7 vorgesehen und ausgelegt.

Mit Hilfe der Wägeeinrichtung 8 bzw. der Wägezellen 9 kann nun die Masse des Schrankkorpus 2 bestimmt werden. Dazu ist bei der einen Ausführungsvariante nach der Fig. 2 jeweils eine Wägezelle 9 fußseitig des Schrankkorpus 2 vorgesehen. Tatsächlich mag die Wägezelle 9 in einen Fuß oder auch den Sockel integriert sein, welcher bzw. welche den Schrankkorpus 2 tragen. Selbstverständlich kann auch nur mit einer einzigen Wägezelle 9 gearbeitet werden.

Indem mit Hilfe der Wägeeinrichtung 8 die Masse des Schrankkorpus 2 bestimmt wird, lassen sich auch etwaige Änderungen der Masse des Schranckorpus 2 erfassen. Dazu wird die jeweilige Masse des Schrankkorpus 2 in der Steuereinheit 7 abgespeichert. Falls nun aus dem Schrankkorpus 2 ein Gefahrstoff 1 entnommen, teilweise verbraucht und danach wieder in den Schranckorpus 2 überführt wird, lässt sich auf diese Weise der mit dem Verbrauch des betreffenden Gefahrstoffes 1 verbundene Masseverlust des Schrankkorpus 2 auswerten und feststellen. Dazu werden mit Hilfe der Steuereinheit 7 Differenzmessungen der gesamten Masse des Schrankkorpus 2 vor und nach der Entnahme des betreffenden Gefahrstoffes 1 durchgeführt.

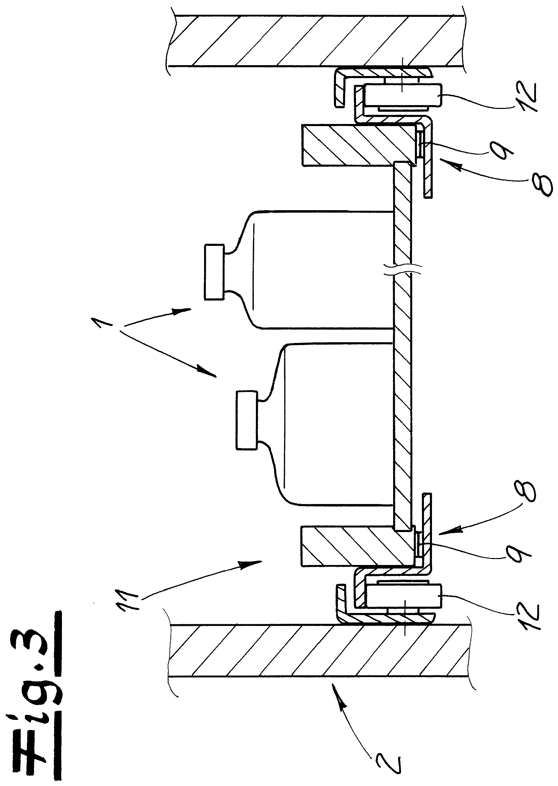

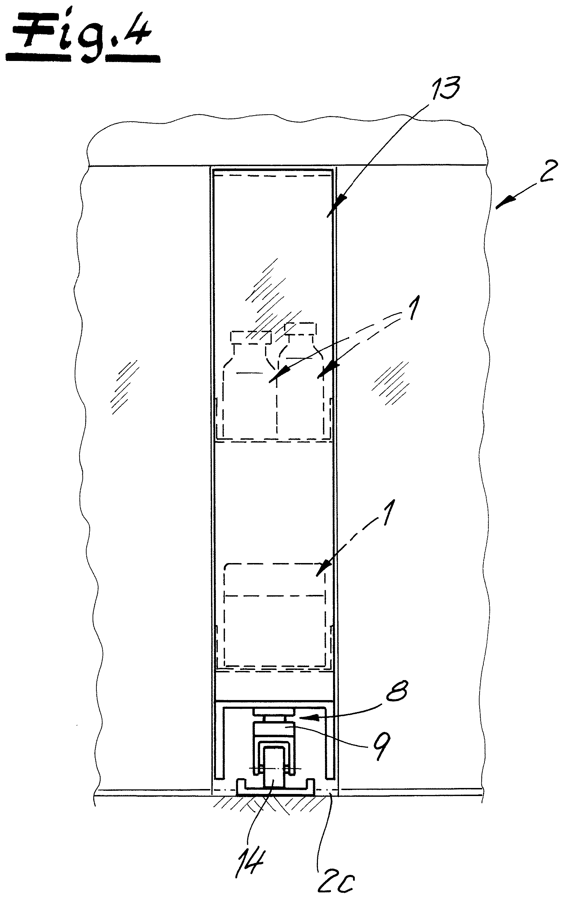

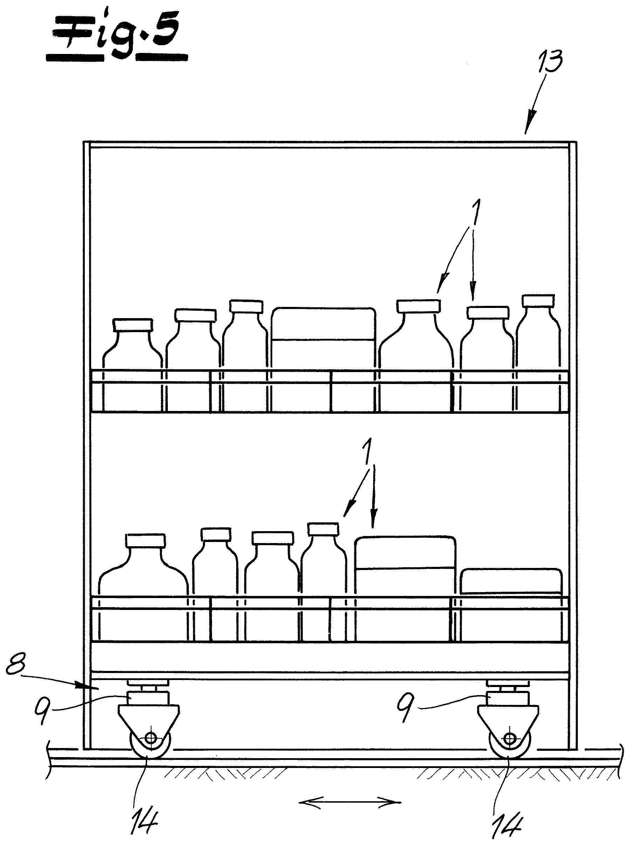

Die Wägeeinrichtung 8 kann alternativ oder zusätzlich auch zur Massebestimmung von wenigstens einem im Schrankkorpus 2 befindlichen Schrankbestandteil 10, 11, 13 eingerichtet werden. Bei dem im Schrankkorpus 2 befindlichen und hinsichtlich seiner Masse erfassten jeweiligen Schrankbestandteil 10, 11, 13 handelt es sich um eine Innenschale 10 im Innern des Schranckorpus 2 nach der Darstellung in der Fig. 2. Die Variante der Fig. 3 greift als Schrankbestandteil 11 auf eine Schublade 11 zurück. In den Fig. 4 und 5 ist eine weitere Variante des Schrankbestandteils 13 in Gestalt eines Auszuges bzw. Vertikalauszuges 13 dargestellt.

Um die Masse der Innenschale 2 im Beispielfall der Fig. 2 zu bestimmen, stützt sich die den Schrankkorpus 2 im Innern nahezu vollständig ausfüllende Innenschale 10 fußseitig über mehrere Wägezellen 9 am Boden 2c des Schrankkorpus 2 ab, und zwar beweglich gegenüber dem Schrankkorpus 2. Die einzelnen Wägezellen 9 mögen dabei jeweils eckseitig der quaderförmigen Innenschale 2 an diese angeschlossen sein. Sobald sich im beschriebenen Beispielfall die Gesamtmasse der Innenschale 2 mit den darin befindlichen Gefahrstoffen 1 durch den Verbrauch eines betreffenden Gefahrstoffes 1 ändert, wird diese Massenänderung - wie zuvor beschrieben - mit Hilfe der Steuereinheit 7 ermittelt. Dazu erfolgt erneut eine Massebestimmung der Innenschale 2 vor und nach der Entnahme des betreffenden Gefahrstoffes 1.

Vergleichbar wird bei den übrigen Ausführungsbeispielen vorgegangen. Im Rahmen der Fig. 3 ist eine Schublade 11 vorgesehen, die zur Aufnahme der Gefahrstoffe 1 wie angedeutet dient. Dazu ist die Schublade 11 mit einem Schubladenkörper ausgerüstet, welcher in einer seitlichen und in der Fig. 3 zu erkennenden Schubladenführung mit Hilfe von Rollen 12 geführt wird. Zwischen den Rollen 12 und dem Schubladenkörper sind die Wägezellen 9 zwischengeschaltet, so dass mit ihrer Hilfe erneut die Masse des Schrankbestandteils 11, im Rahmen des Ausführungsbeispiels nach der Fig. 3 der Schublade 11, wiederum vor und nach der Entnahme des betreffenden Gefahrstoffes 1 ermittelt werden kann.

Bei der weiteren Variante nach der Fig. 4 ist ein Auszug 13 im Innern des Schrankkorpus 2 vorgesehen. Der Auszug 13 lässt sich aus dem Schranckorpus 2 selbsttätig oder mit Hilfe eines motorischen Antriebes in eine Offenlage ganz oder teilweise aus dem Schrankkorpus 2 ausfahren. Dadurch werden die im Auszug 13 aufgenommenen und bevorrateten Gefahrstoffe 1 zugänglich. Der Auszug bzw. Vertikalauszug 13 ist zu diesem Zweck auf Rollen 14 gelagert, die sich gegenüber der Bodenwandung 2c des Schrankkorpus 2 abstützen. Anhand der Seitenansicht in der Fig. 5 erkennt man, dass die Rollen 14 erneut unter Zwischenschaltung der Wägezellen 9 den Auszug 13 tragen. Auf diese Weise kann mit Hilfe der Wägezellen 9 wiederum die Gesamtmasse des Auszuges 13 vor und nach der Entnahme des jeweiligen Gefahrstoffes 1 mit Hilfe der Steuereinheit 7 ermittelt werden, welche die von den einzelnen Wägezellen 9 abgegebenen elektrischen Messwerte aufnimmt und verarbeitet.

Das heißt, die im Schrankkorpus 2 befindlichen und zuvor im Detail beschriebenen Schrankbestandteile 10, 11, 13 sind zur Aufnahme eines oder mehrerer Gefahrstoffe 1 ausgebildet. Außerdem sind die jeweiligen Schrankbestandteile 10, 11, 13 bewegbar gegenüber dem Schrankkorpus 2 ausgelegt.

Tatsächlich lassen sich die fraglichen Schrankbestandteile 10, 11, 13 zwischen zumindest einer Vorratsposition und einer Beladungsposition hin- und herbewegen. In der Vorratsposition sind die Schrankbestandteile 10, 11, 13 versenkt im Innern des Schrankkorpus 2 angeordnet, so dass im Beispielfall die Drehflügeltüren 3 geschlossen werden können. Die Beladungsposition der Schrankbestandteile 10, 11, 13 korrespondiert demgegenüber dazu, dass in dieser Beladungsposition der jeweilige Gefahrstoff 1 entnommen und wieder zurückgegeben werden kann.

Mit Hilfe der einleitend bereits angesprochenen Bedieneinheit 6 kann ein Benutzer identifiziert werden. Dazu ist die Bedieneinheit 6 im Ausführungsbeispiel und entsprechend der Darstellung in der Fig. 1 als Tastaturfeld ausgelegt. Das gilt selbstverständlich nur beispielhaft und nicht einschränkend. Der Benutzer muss sich über das Tastaturfeld bzw. die Bedieneinheit 6 an dem Sicherheitsschrank anmelden, um die beiden Drehflügeltüren 3 öffnen zu können. Dazu ist es erforderlich, dass der Benutzer einen korrespondierenden und zulässigen Code an der Bedieneinheit 6 eingibt.

Stellt die Bedieneinheit 6 auf diese Weise die Zugangsberechtigung des Benutzers fest, so wird mit Hilfe der Steuereinheit 7 eine in der Fig. 1 angedeutete Verriegelung 15 entriegelt und können die beiden Drehflügeltüren 3 geöffnet werden. Ist der Code ungültig oder ansonsten die Zugangsberechtigung des Benutzers gesperrt, so gibt die Steuereinheit 7 die Verriegelungseinheit 15 nicht frei und der Sicherheitsschrank bzw. dessen Drehflügeltüren 3 können nicht geöffnet werden.

Die Bedieneinheit 6 dient im Ausführungsbeispiel nicht nur zur Identifizierung des Benutzers, sondern auch des jeweiligen und im Innern des Sicherheitsschrankes bevorrateten Gefahrstoffes 1. Tatsächlich erwartet die Bedieneinheit 6 nach der Freigabe der Verriegelungseinheit 15 mit Hilfe der an die Bedieneinheit 6 angeschlossenen Steuereinheit 7, dass eine weitere Eingabe erfolgt. Diese weitere Eingabe korrespondiert zu dem entnommenen oder zu entnehmenden Gefahrstoff 1. Hierbei kann es sich erneut um einen zum betreffenden Gefahrstoff 1 gehörigen Code handeln. Selbstverständlich kann der Gefahrstoff 1 aber auch anderweitig identifiziert werden, beispielsweise über eine Scanneinrichtung und einen aufgedruckten Barcode oder wie auch immer.

Entscheidend ist, dass die Steuereinheit 7 bei geöffnetem Sicherheitsschrank bzw. geöffneten Drehflügeltüren 3 als nächstes über den jeweils zu entnehmenden oder entnommenen Gefahrstoff 1 informiert wird bzw. informiert werden muss. Andernfalls mag die Steuereinheit 7 eine angeschlossene Warneinrichtung 16 aktivieren. Dadurch kann die Steuereinheit 7 den zuvor identifizierten Benutzer dem fraglichen Gefahrstoff 1 zuordnen. Außerdem lassen sich auf diese Weise etwaige Verbrauchswerte feststellen. Denn aus dem Gewicht bzw. der Masse des Schrankkorpus 2 bzw. der im Schrankkorpus 2 befindlichen Schrankbestandteile 10, 11, 13 vor und nach der Entnahme des Gefahrstoffes 1 kann auf den Masseverlust an dem betreffenden Gefahrstoff 1 rückgeschlossen werden. Aus diesem Masseverlust lässt sich bei Kenntnis des Gefahrstoffes auf das entnommene Volumen rückschließen. Außerdem wird die entnommene Masse bzw. das entnommene Volumen des Gefahrstoffes 1 dem fraglichen Benutzer zugeordnet.

Zu diesem Zweck ist der Benutzer meistens mit einem in der Steuereinheit 7 hinterlegten Benutzerkonto ausgerüstet. Auf dem Benutzerkonto werden dann die einzelnen Entnahmen des fraglichen Benutzers an den jeweiligen Gefahrstoffen 1 verbucht. Das heißt, die Steuereinheit 7 ermittelt aus den elektrischen Signalen der Wägezelle 9 letztendlich Verbrauchswerte des jeweiligen Gefahrstoffes 1 und ordnet diese dem zuvor identifizierten Benutzer zu.

Aus den Verbrauchswerten für den jeweiligen Gefahrstoff lassen sich Angaben über den Lagerbestand an dem betreffenden Gefahrstoff 1 herleiten. Außerdem können bei Unterschreitung eines bestimmten Lagerbestandes automatisch Nachbestellungen initiiert werden. Darüber hinaus können anhand der Verbrauchswerte Plausibilitätsabfragen vorgenommen werden.

Beispielsweise ist es denkbar, die jeweils entnommene Menge an dem identifizierten Gefahrstoff 1 mit typischen Verbrauchswerten oder gemittelten Verbrauchswerten des betreffenden Gefahrstoffes 1 zu vergleichen. Weicht die entnommene Menge hiervon deutlich ab, kann eine Warnung an die zusätzliche und in der Fig. 1 lediglich angedeutete Warneinrichtung 16 abgegeben werden. Die Warneinrichtung 16 ist im Beispielfall an die Steuereinheit 7 angeschlossen und wird von dieser beaufschlagt. Wie die Steuereinheit 7 so muss auch die Warneinrichtung 16 nicht notwendigerweise am oder im Bereich des Sicherheitsschrankes bzw. dessen Schrankkorpus 2 angeordnet werden. Sondern es ist alternativ oder zusätzlich auch denkbar, dass die Warneinrichtung 16 zusammen mit der Steuereinheit 7 oder getrennt hiervon örtlich beabstandet vom Schrankkorpus 2 in der zuvor bereits angesprochenen Leitstelle vorhanden ist und dort eine entsprechende Warnung im beschriebenen Beispielfall abgibt.

Von besonderer Bedeutung ist darüber hinaus die Möglichkeit, anhand der Verbrauchswerte des jeweiligen Gefahrstoffes 1 eine Sicherheitsabfrage vorzunehmen. Im Rahmen dieser Sicherheitsabfrage überprüft die Steuereinheit 7 beispielsweise die von dem zuvor identifizierten Benutzer jeweils entnommenen Verbrauchswerte der jeweiligen Gefahrstoffe 1 dahingehend, ob sich aus den entnommenen Mengen beispielsweise besonders brennbares oder explosives Material herstellen lässt oder nicht. Diese Sicherheitsabfrage kann grundsätzlich auch losgelöst vom Benutzer für den Sicherheitsschrank als solchen oder bei Vorhandensein mehrerer Sicherheitsschränke in einem Raum für den gesamten Raum vorgenommen werden. In diesem Fall werden die Gesamtmengen bzw. Gesamtverbrauchswerte der einzelnen Gefahrstoffe 1 dahingehend untersucht, ob sich hieraus gegebenenfalls explosives Material herstellen lässt und bejahendenfalls welches. Diese Abfragen lassen sich mit Hilfe der Steuereinheit 7 problemlos unter Berücksichtigung dort hinterlegter Rezepturen für denkbare explosive Mischungen vornehmen und durchführen.

## Patentansprüche

1. Sicherheitsschrank, insbesondere Gefahrstoffschrank zur Lagerung flüssiger oder gasförmiger Gefahrstoffe (1), mit einem Schrankkorpus (2), und mit einer Wägeeinrichtung (3), **dadurchgekennzeichnet**, dass
- die Wägeeinrichtung (8) zur Massebestimmung des Schrankkorpus (2) und/oder von wenigstens einem im Schrankkorpus (2) befindlichen Schrankbestandteil (10, 11, 13) eingerichtet ist und dazu
- zumindest eine Wägezelle (9) aufweist, welche fußseitig des Schrankkorpus (2) und/oder des jeweiligen Schrankbestandteiles (10, 11, 13) angeordnet ist sowie
- masseproportionale elektrische Signale an eine Steuereinheit (7) übermittelt, welche die fraglichen Signale verarbeitet und
- mit einer Bedieneinheit (6) zur Identifizierung eines Benutzers und/oder des jeweiligen Gefahrstoffes verbunden ist.

2. Schrank nach Anspruch 1, **dadurch gekennzeichnet, dass** die im Schranckorpus (2) befindlichen Schrankbestandteile (10, 11, 13) zur Aufnahme einer oder mehrerer Gefahrstoffe (1) ausgebildet sind.

3. Schrank nach Anspruch 1 oder 2, **dadurch gekennzeichnet, dass** die im Schrankkorpus (2) befindlichen Schrankbestandteile (10, 11, 13) zwischen zumindest einer Vorratsposition und einer Beladungsposition hin- und herbewegbar ausgebildet sind.

4. Schrank nach einem der Ansprüche 1 bis 3, **dadurch gekennzeichnet, dass** es sich bei dem Schrankbestandteil (10, 11, 13) um beispielsweise eine Schublade (11), einen Auszug (13), eine Plattform, eine Innenschale (10) etc. handelt.

5. Schrank nach einem der Ansprüche 1 bis 4, **dadurch gekennzeichnet, dass** mehrere Wägezellen (9) vorgesehen sind, die beispielsweise fußseitig verteilt des Schrankkorpus (2) und/oder des Schrankbestandteils (10, 11, 13) angeordnet sind.

6. Schrank nach einem der Ansprüche 1 bis 5, **dadurch gekennzeichnet, dass** ein Filter für die elektrischen Signale vorgesehen ist.

7. Schrank nach einem der Ansprüche 1 bis 6, **dadurch gekennzeichnet, dass** die Steuereinheit (7) aus den elektrischen Signalen der Wägezelle (9) Verbrauchswerte des jeweiligen Gefahrstoffes (1) ermittelt.

8. Schrank nach Anspruch 7, **dadurch gekennzeichnet, dass** die Verbrauchswerte einem Bediener zugeordnet werden.

9. Schrank nach Anspruch 7 oder 8, **dadurch gekennzeichnet, dass** die Verbrauchswerte des jeweiligen Gefahrstoffes (1) für Nachbestellungen, Plausibilitätsabfragen und/oder Sicherheitsabfragen seitens der Steuereinheit (7) ausgewertet werden.

10. Schrank nach einem der Ansprüche 1 bis 9, **dadurch gekennzeichnet, dass** eine zusätzliche Warneinrichtung (16) vorgesehen ist.

## Claims

1. A safety cabinet, in particular cabinet for hazardous materials, for storing liquid or gaseous hazardous materials (1), with a cabinet body (2) and with a weighing device (3), **characterized in that**
- the weighing device (8) is configured for determining the mass of the cabinet body (2) and/or of at least one cabinet component (10, 11, 13) located in the cabinet body (2) and for this purpose
- has at least one load cell (9), which is arranged at the foot of the cabinet body (2) and/or the respective cabinet component (10, 11, 13), and
- transmits electrical signals proportional to mass to a control unit (7) which processes the signals in question and
- is connected to an operating unit (6) for identifying a user and/or the respective hazardous material.

2. The cabinet according to claim 1, **characterized in that** the cabinet components (10, 11, 13) located in the cabinet body (2) are designed to accommodate one or more hazardous materials (1).

3. The cabinet according to claim 1 or 2, **characterized in that** the cabinet components (10, 11, 13) located in the cabinet body (2) are designed to be movable back and forth between at least one storage position and one loading position.

4. The cabinet according to any one of claims 1 to 3, **characterized in that** the cabinet component (10, 11, 13) is, for example, a drawer (11), a pull-out shelf (13), a platform, an inner tray (10) etc..

5. The cabinet according to any one of claims 1 to 4, **characterized in that** a plurality of load cells (9) are provided, which are arranged, for example, distributed at the foot of the cabinet body (2) and/or the cabinet component (10, 11, 13).

6. The cabinet according to any one of claims 1 to 5, **characterized in that** a filter for the electrical signals is provided.

7. The cabinet according to any one of claims 1 to 6, **characterized in that** the control unit (7) determines consumption values of the respective hazardous substance (1) from the electrical signals of the load cell (9).

8. The cabinet according to claim 7, **characterized in that** the consumption values are associated with an operator.

9. The cabinet according to claim 7 or 8, **characterized in that** the consumption values of the respective hazardous substance (1) are evaluated by the control unit (7) for repeat orders, plausibility queries and/or safety queries.

10. The cabinet according to any one of claims 1 to 9, **characterized in that** an additional warning device (16) is provided.

## Revendications

1. Armoire de sécurité, en particulier armoire pour matières dangereuses destinée à l'entreposage de matières dangereuses liquides ou gazeuses (1), avec un corps d'armoire (2) et avec un système de pesée (3) **caractérisée en ce que**
- le système de pesée (8) est agencé pour la détermination de la masse du corps d'armoire (2) et/ou d'au moins un composant d'armoire (10, 11, 13) se trouvant dans le corps d'armoire (2) et
- comporte à cet effet au moins une cellule de pesée (9), laquelle est disposée du côté du pied du corps d'armoire (2) et/ou du composant d'armoire (10, 11, 13) respectif et
- transmet des signaux électriques proportionnels à la masse à une unité de commande (7), laquelle traite les signaux douteux et
- est reliée à une unité d'utilisation (6) pour identifier un utilisateur et/ou la matière dangereuse respective.

2. Armoire selon la revendication 1, **caractérisée en ce que** les composants d'armoire (10, 11, 13) se trouvant dans le corps d'armoire (2) sont constitués pour recevoir une ou plusieurs matières dangereuses (1).

3. Armoire selon la revendication 1 ou 2, **caractérisée en ce que** les composants d'armoire (10, 11, 13) se trouvant dans le corps d'armoire (2) sont constitués pouvant se déplacer en un mouvement de va-et-vient entre au moins une position d'approvisionnement et une position de chargement.

4. Armoire selon l'une quelconque des revendications 1 à 3, **caractérisée en ce que** concernant le composant d'armoire (10, 11, 13), il s'agit par exemple d'un tiroir (11), d'une rallonge (13), d'une plateforme, d'une coque intérieure (10) etc.

5. Armoire selon l'une quelconque des revendications 1 à 4, **caractérisée en ce que** plusieurs cellules de pesée (9) sont prévues, qui sont disposées par exemple réparties du côté du pied du corps d'armoire (2) et/ou du composant d'armoire (10, 11, 13).

6. Armoire selon l'une quelconque des revendications 1 à 5, **caractérisée en ce qu'**un filtre est prévu pour les signaux électriques.

7. Armoire selon l'une quelconque des revendications 1 à 6, **caractérisée en ce que** l'unité de commande (7) détermine des valeurs de consommation de la matière dangereuse (1) respective à partir des signaux électriques de la cellule de pesée (9).

8. Armoire selon la revendication 7, **caractérisée en ce que** les valeurs de consommation sont attribuées à un utilisateur.

9. Armoire selon la revendication 7 ou 8, **caractérisée en ce que** les valeurs de consommation de la matière dangereuse (1) respective sont évaluées pour les commandes de réapprovisionnement, les questions de vraisemblance et/ou questions de sécurité de la part de l'unité de commande (7).

10. Armoire selon l'une quelconque des revendications 1 à 9, **caractérisée en ce qu'**un dispositif d'avertissement (16) supplémentaire est prévu.
